## Europäisches Patentamt

## European Patent Office

## Office européen des brevets

(11) Veröffentlichungsnummer: **0 327 845**
A2

# EUROPÄISCHE PATENTANMELDUNG

(21) Anmeldenummer: 89100798.1

(51) Int. Cl.⁴: **F16J 15/34**

(22) Anmeldetag: 18.01.89

(30) Priorität: 09.02.88 DE 3803936

(43) Veröffentlichungstag der Anmeldung:
16.08.89 Patentblatt 89/33

(84) Benannte Vertragsstaaten:
AT BE CH DE FR GB IT LI NL SE

(71) Anmelder: Feodor Burgmann Dichtungswerke GmbH & Co.
Äussere Sauerlacher Strasse 6-8
D-8190 Wolfratshausen 1(DE)

(72) Erfinder: Steigenberger, Georg
Brunnenstrasse 22
D-8192 Holzhausen(DE)

(74) Vertreter: Empl, Karl et al
Patentanwälte Dipl.-Ing. K. Empl Dipl.-Ing.,
Dipl.-Wirtsch.-Ing. K. Fehners
Schumannstrasse 2
D-8000 München 80(DE)

(54) Gleitringdichtung.

(57) Die Gleitringdichtung enthält einen an der Welle (2) festen, aus Siliziumcarbid bestehenden Gegenring (7), auf dessen zylindrische äußere Umfangsfläche (11) eine Bandage (9) aus Metall unter Vorspannung aufgezogen ist, die beidseitig Teile dieser Umfangsfläche frei läßt. In einem radial außerhalb der Gleitfläche (7') gelegenem ringförmigen Bereich sind unter gleichen Winkelabständen mehrere offene Nuten (8) ausgebildet, deren radial innere Enden bis zur äußeren Umfangslinie (U') der Gleitfläche (7') reichen und deren äußere Enden in dem von der Bandage (9) freien Teil der äußeren Umfangsfläche (11) des Gegenringes auslaufen. Die Mittelebenen (M) der Nuten (8) liegen in die Wellenachse (3) enthaltenden Ebenen und der Abstand (A) zwischen den Nuten (8) ist wenigstens das 3-fache der Nutenbreite (B). Eine derart ausgebildete Gleitringdichtung zeigt in einem großen Drehzahlbereich ein hydrodynamisches Laufverhalten und kann bei geringer Lekkage für große Umfangsgeschwindigkeiten und hohe abzudichtende Drücke eingesetzt werden.

Fig. 3

## Gleitringdichtung

Die Erfindung betrifft eine Gleitringdichtung, enthaltend einen Gleitring, der am Dichtungsgehäuse drehfest gehalten und in Axialrichtung verschieblich gelagert ist, gegen das Dichtungsgehäuse mit einer Sekundärdichtung abgedichtet und über eine axial wirkende Federanordnung abgestützt ist und der mit seiner in einer Radialebene gelegenen ringförmigen ersten Gleitfläche an einer zweiten ebenen Gleitfläche anliegt, welche in einer Stirnfläche eines an einer Welle drehfest und axial unverschieblich gehaltenen und gegen die Welle abgedichteten Gegenringes ausgebildet ist, wobei die Stirnfläche einen sich radial außerhalb der zweiten Gleitfläche erstreckenden ringförmigen Bereich aufweist, in dem unter gleichen Winkelabständen eine Mehrzahl von zum Gleitring offenen Nuten ausgebildet sind, die mit ihren radial inneren Enden bis oder nahezu bis zur radial äußeren Umfangslinie der zweiten Gleitfläche reichen und mit ihren äußeren Enden in einer äußeren Umfangsfläche liegen.

Bei einer bekannten Gleitringdichtung dieser Art (US-PS 36 08 910) ist der sich radial außerhalb der Gleitfläche des Gegenringes befindliche Bereich in Form einer Kegelfläche ausgebildet. In dieser Kegelfläche sind die Nuten so eingeschnitten, daß ihre Mittelebenen einen gedachten, zur Wellenachse koaxialen Zylinder tangieren, dessen Durchmesser näherungsweise gleich dem Gleitflächendurchmesser ist. Die Nuten sind ferner so ausgebildet, daß sie sich in Radialrichtung überlappen, d.h. eine durch die Wellenachse und das radial äußere Ende einer Nut gelegte Mittelebene befindet sich zwischen zwei durch die Wellenachse gelegten Ebenen, die durch das radial äußere bzw. radial innere Ende der nächstfolgenden Nut gehen.

Die erläuterten Nuten bilden zusammen mit den zwischen ihnen verbleibenden Stegen ein in den Gegenring integriertes Pumpenschaufelrad, das mit geringem Spiel vor einer im Dichtungsgehäuse ausgebildeten kegelförmigen Wandungsfläche rotiert. Das Pumpenschaufelrad saugt Flüssigkeit aus einem die Gleitflächen radial außen umgebenden Ringraum ab und fördert diese zu einer das Dichtungsgehäuse durchdringenden Außlaßbohrung. Die durch die Nuten streichenden Flüssigkeit nimmt zwar Wärme vom Gegenring auf, wobei aber wegen der näherungsweise konstanten Strömungsquerschnitte der von den Nuten und der kegelförmigen Wandungsfläche gebildeten Kanäle die Strömung wenig turbulent ist und daher auch der Wärmeübergang vom Gegenring zur Flüssigkeit relativ gering ist. Durch die radial überlappende Anordnung der Nuten kühlt die Flüssigkeit den Gegenring nahezu gleichförmig ab, so daß thermische Verwerfungen in der zweiten Gleitfläche nicht mehr feststellbar sind.

Bekannt ist ferner eine Gleitringdichtung (GB-PS 648 270), deren gegen eine Federanordnung abgestützter Gleitring mit der Welle rotiert, während der Gegenring mit seiner Sitzfläche in großflächigem metallischen Kontakt an einer Gegensitzfläche des Dichtungsgehäuses ortsfest gehalten ist. Der Gleitring trägt Ventilatorschaufeln, welche Luft gegen den radial außerhalb der Gleitfläche gelegenen Bereich des Gegenringes bläst, in dem viertelkreisförmige Nuten ausgebildet sind. Wegen der wärmeausgleichenden Wirkung des Gehäuses und der großen Abstände der radial inneren Enden der Nuten zu der Gleitfläche des Gegenringes vermögen die Nuten zu keiner verwertbaren thermischen Verwerfung der Gleitfläche führen. Eine durch Gleitflächenverwerfung bewirktes hydrodynamisches Laufverhalten ist ohnehin durch die fast schneidenförmige Geometrie des Gleitringes nicht erreichbar.

Bekannt ist es auch, bewußt zu dem Zweck, ein hydrodynamisches Laufverhalten ermöglichende Verwerfungen in der Gleitfläche zu erzeugen, im umlaufenden Gleit- oder Gegenring um den Umfang verteilte Aussparungen vorzusehen, welche in den Dichtspalt hineinreichen, d.h. in die ringförmige gemeinsame Berührungsfläche von Gleitring und Gegenring. Diese Aussparungen können die Form von kurzen radialen Nuten haben oder als angenähert sekantenförmige Zirkulationsnuten ausgebildet sind. (Mayer, Erhard, Axiale Gleitring dichtungen, 4. Auflage 1970, VDI-Verlag GMBH, Düsseldorf, Seiten 81, 83 und 202), wobei auch zur Erzeugung eines Flüssigkeitsstromes zusätzliche Pumpennuten an einem den Gleitring aufnehmenden Trägerring vorgesehen sein können. Die erläuterten Aussparungen führen zu einer höherern Lekkage, die so groß werden kann, daß sogar ein Erosionsverschleiß an den Gleitflächen eintritt.

Aufgabe der Erfindung ist es, eine auch für große Umfangsgeschwindigkeiten und hohe abzudichtende Drücke geeignete Gleitringdichtung zu schaffen, welche bei niedriger Leckage in einem großen Drehzahlbereich ein hydrodynamisches Laufverhalten zeigt, wobei durch turbulente Strömung eine gute Kühlung durch die umgebende Flüssigkeit erzielbar ist.

Ausgehend von einer Gleitringdichtung der eingangs erläuterten Art wird diese Aufgabe dadurch gelöst, daß die Mittelebenen der Nuten in die Achse der Welle enthaltenden Ebenen liegen und daß der Abstand zwischen den Nuten, gemessen an der äußeren Umfangsfläche des Gegenringes, wenigstens das 3-fache der Nutenbreite ist.

In erfindungsgemäßer Weiterbildung ist auf der äußeren Umfangsfläche des Gegenringes eine Bandage angeordnet, welche auf ihren beiden axialen Seiten Teile der äußeren Umfangsfläche frei läßt. Diese Bandage verbessert, neben der Möglichkeit zur mechanischen Stabilisierung des Gegenringes gegen die Fliehkraft, die Aus bildung von ein hydrodynamisches Laufverhalten bewirkenden Verwerfungen. Vorzugsweise ist die Bandage unter Vorspannung auf die äußere Umfangsfläche des Gegenringes aufgezogen und/oder besteht aus einem Material, dessen Wärmeausdehnungskoeffizient wesentlich von demjenigen des Gegenringes abweicht. Durch die Nuten tritt eine Störung in der Druckverteilung der von der Bandage in den Gegenring eingebrachten Kräfte auf. Dies führt, auch wenn die Gleitfläche des Gegenringes nach dem Aufziehen der Bandage wieder plangeschliffen wird, durch die im Betrieb erfolgende Temperaturänderung zu Verwerfungen, die sich denjenigen Verwerfungen überlagern, welche sich durch unterschiedliche Abkühlung an den Nuten einstellen. Hierdurch ist die Möglichkeit gegeben, die Welligkeit der Gleitfläche nach Form und Größe so zu steuern, daß sich auch bei unterschiedlichen Betriebsbedingungen ein optimales hydrodynamisches Laufverhalten einstellt.

Weitere Merkmale und Vorteile der Erfindung ergeben sich aus den Unteransprüchen und der Beschreibung.

Ein Ausführungsbeispiel der Erfindung ist in der Zeichnung dargestellt und wird im folgenden näher beschrieben. Es zeigt

　　Fig. 1 einen Teil-Längsschnitt durch eine erfindungsgemäß ausgebildete Gleitringdichtung,

　　Fig. 2 eine Stirnansicht eines in der Gleitringdichtung gemäß Fig. 1 verwendeten Gegenringes und

　　Fig. 3 einen Längsschnitt durch den Gegenring gemäß Fig. 2, sowie eines Teiles des daran anliegenden Gleitringes.

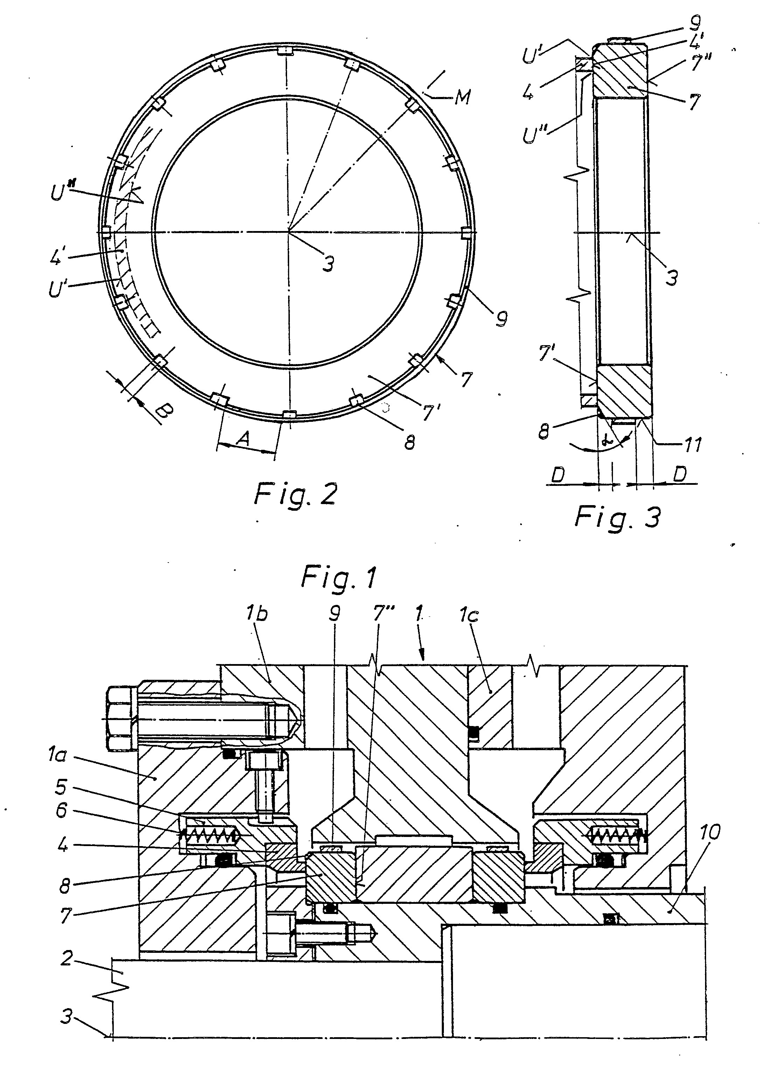

Die in Fig. 1 veranschaulichte Gleitringdichtung ist in doppelt wirkende Bauart ausgebildet und dient zur Abdichtung einer aus mehreren Teilen 1a - 1c bestehenden Dichtungsgehäuses 1 gegenüber einer Welle 2, welche um eine Achse 3 umläuft. In jedem der beiden endseitigen, deckelförmig gestalteten Teilen 1a, 1c des Dichtungsgehäuses ist ein einen Gleitring 4 haltender Trägerring 5 axial verschieblich, jedoch drehfest geführt und durch eine Federanordnung 6 abgestützt. Die aufeinander zuweisenden Gleitflächen 4′ der Gleitringe 4 liegen an den Gleitflächen 7′ von zwei später noch näher erläuterten Gegenringen 7 an, welche Nuten 8 und ein Bandage 9 aufweisen. Die Gegenringe 7 sind drehfest und axial unverschieblich auf einer an der Welle 2 festen Wellenhülse 10 gelagert und durch 0-Ringe abgedichtet, wobei sich ihre an den von der Gleitfläche abgewandten Stirnfläche ausgebildeten Sitzfläche 7″ gegen einen an der Wellenhülse 10 festen Ring abstützen.

Der in den Fig. 2 und 3 dargestellte Gegenring 7 besteht aus einem einstückigen Körper aus Siliziumcarbid und weist im wesentlichen quadratische Querschnittsform auf, wobei an allen vier Kanten Abfasungen vorgesehen sind. Auf die zylindrische äußere Umfangsfläche 11 des Gegenringes ist unter Vorspannung die Bandage 9 aufgezogen (in Fig. 2 nur zum Teil veranschaulicht), welche aus einem Metall besteht, dessen Wärmedehnungskoeffizient gleich oder vorzugsweise kleiner als derjenige des Gegenringes 7 ist. Die axiale Breite der Bandage 9 ist geringer als diejenige des Gegenringes 7, so daß zu ihren beiden Seiten jeweils ein Teil der äußeren Umfangsfläche des Gegenringes in einer Breite D frei bleibt,die in der Größenordnung von 5 mm liegt. An der Gleitfläche 7′ des Gegenringes 7 liegt die schmäler ausgebildete Gleitfläche 4′ des Gleitringes 4 an, dessen äußere Umfangslinie mit U′ und dessen innere Umfangslinie mit U″ bezeichnet ist. In dem zwischen der äußeren Umfangslinie U′ und der äußeren Umfangsfläche 11 gelegenen ringförmigen Bereich sind in dem Gegenring 7 in gleich Winkelabständen die Nuten 8 ausgebildet. Der Boden jeder Nut verläuft unter einem Winkel $\alpha$, der in der Regel in einem Bereich von 30° bis 45° liegt, für jede Nut gleich ist und im veranschaulichten Fall 35° beträgt. Die Breite B der Nut beträgt ca. 4 mm. Die Mittelebenen M der Nuten 8 gehen durch die Achse 3 der Welle 2 und haben untereinander gleiche Winkelabstände. Die Abstände A zwischen den Nuten 8 betragen wenigstens das 3-fache der Nutenbreite B.

## Ansprüche

1. Gleitringdichtung, enthaltend einen Gleitring, der am Dichtungsgehäuse drehfest gehalten und in Axialrichtung verschieblich gelagert ist, gegen das Dichtungsgehäuse mit einer Sekundärdichtung abgedichtet und über eine axial wirkende Federanordnung abgestützt ist und der mit seiner in einer Radialebene gelegenen ringförmigen ersten Gleitfläche an einer zweiten ebenen Gleitfläche anliegt, welche in einer Stirnfläche eines an einer Welle drehfest und axial unverschieblich gehaltenen und gegen die Welle abgedichteten Gegenringes ausgebildet ist, wobei die Stirnfläche einen sich radial außerhalb der zweiten Gleitfläche erstreckenden ringförmigen Bereich aufweist, in dem unter gleichen Winkelabständen eine Mehrzahl von zum Gleitring offenen Nuten ausgebildet sind, die mit ihren radial inneren Enden bis oder nahezu bis zur radial äußeren Umfangslinie der zweiten Gleitfläche reichen und mit ihren äußeren Enden in einer äußeren Umfangsfläche des Gegenringes liegen, **dadurch gekennzeichnet, daß** die Mittelebenen (M) der Nuten (8) in die Achse (3) der Welle (2) enthaltenden Ebenen liegen und daß der Abstand (A) zwischen den Nuten, gemessen an der äußeren Umfangsfläche (11) des Gegenringes (7), wenigstens das 3-fache der Nutenbreite (B) ist.

2. Gleitringdichtung nach Anspruch 1, **dadurch gekennzeichnet, daß** auf der äußeren Umfangsfläche (11) des Gegenringes (7) eine Bandage (9) angeordnet ist, welche auf ihren beiden axialen Seiten Teile der äußeren Umfangsfläche frei läßt.

3. Gleitringdichtung nach Anspruch 2, **dadurch gekennzeichnet, daß** die Bandage (9) unter Vorspannung auf die äußere Umfangsfläche (11) des Gegenringes (7) aufgezogen ist.

4. Gleitringdichtung nach Anspruch 2 oder 3, **dadurch gekennzeichnet, daß** die Bandage (9) aus einem Material besteht, dessen Wärmeausdehnungskoeffizient wesentlich von demjenigen des Gegenringes (7) abweicht.

5. Gleitringdichtung nach Anspruch 2, 3 oder 4, **dadruch gekennzeichnet, daß** die Bandage (9) aus Metall besteht.

6. Gleitringdichtung nach Anspruch 2, 3, 4 oder 5, **dadurch gekennzeichnet, daß** der Gegenring (7) einschließlich des radial außerhalb seiner Gleitfläche gelegenen Teils durch ein einstückiges massives Bauteil aus Siliziumcarbid gebildet ist.

7. Gleitringdichtung nach Anspruch 1, **dadurch gekennzeichnet** daß die äußere Umfangsfläche (11) des Gegenringes (7) eine Zylinderfläche ist.

EP 0 327 845 A2

Fig. 2

Fig. 3

Fig. 1